# EUROPEAN PATENT APPLICATION

(11) **EP 4 699 591 A1**
(43) Date of publication of application: **25.02.2026**
(21) Application number: 23934184.5
(22) Date of filing: 11.05.2023
(51) Int. Cl.: A61H 1/02, A61H 3/00, B25J 9/00

(54) **REVERSE LOAD DEVICE AND GAIT TRAINING SYSTEM INCLUDING SAME**

(30) Priority: 19.04.2023 KR 20230051555
(71) Applicant: P&S Robotics Co., Ltd., Seoul 07294 (KR)
(72) Inventor: PARK, Kwang Hun, Seoul 04153 (KR); KIM, Jong Hyeok, Shiheung-Si, Gyeonggi-do 14912 (KR)
(74) Representative: Michalski Hüttermann & Partner Patentanwälte mbB
(86) International application number: PCT/KR2023/006414
(87) International publication number: WO 2024/219536

(57) **Abstract**

The present invention relates to a reverse load device and a gait training system including same and, more specifically, to a reverse load device providing effective reverse load by obtaining a reverse load weight that reduces the load of a subject, and a gait training system including the device. The reverse load device according to an embodiment of the present invention may include: a rope connected to a subject; a traction unit that pulls the rope to provide a reverse load to the subject; and a reverse load weight detection unit that measures the reverse load weight provided to the subject.

## Description

### TECHNICAL FIELD

The present invention relates to a reverse load device and a gait training system including the same, and more particularly, to a reverse load device providing an effective reverse load by obtaining a reverse load weight that reduces a load of a subject, and a gait training system including the device.

### BACKGROUND ART

Human gait is divided into stance and swing phases, and a gait cycle is constituted by two gaits such as a left gait and a right gait. During the gait cycle, a vertical direction of the body's center of mass (CoM) moves in a sinusoidal pattern. The movement of the center of mass in the vertical direction represents two complete sine waves during one gait cycle. In addition, in potential energy and kinetic energy during the gait cycle, the potential energy may be minimized when the center of mass is lowest, and the potential energy may be maximized when the center of mass is highest. Natural gait is characterized by minimizing energy consumption by efficiently transferring energy during the gait.

For the natural gait, active participation of muscles in lower extremities including a hip joint, a knee joint, and an ankle joint is required. However, trainees who do not have smooth active movement of the lower extremity muscles gait according to their own physical conditions, and thus, various pathological gait characteristics are shown, and a pathological gait is learned to allow the gait to be continue with the learned pathological gait posture even after functional recovery of the lower extremities.

Thus, in order for the trainee to learn the natural gait, it is necessary to conduct training that allows the trainee to maintain a natural gait pattern by adjusting a reduced weight load applied to the trainee's lower extremities according to the physical recovery stage and real-time physical conditions. In addition, it is necessary to detect the real-time conditions of the trainee and adjust the load weight to be reduced due to reasons such as a lack of concentration or physical strength of the trainee, or an adaptation process according to new training conditions.

In general, there was a limitation in providing natural movement including the hip joint, the knee joint, and the ankle joint while simultaneously providing a reverse load function that adjusts a position of the CoM to suit the gait cycle or force and energy generated in real time according to the patient's training conditions or status.

(Patent Document 1) Korean Patent Publication No. 2009-0104261

### DISCLOSURE OF THE INVENTION

### TECHNICAL PROBLEM

The present invention provides a reverse load device that provides an effective reverse load by obtaining a reverse load weight that reduces a load of a subject.

The present invention provides a gait training system that induces natural gait movement of a trainee.

### TECHNICAL SOLUTION

A reverse load device according to an embodiment of the present invention may include: a rope connected to a subject; a traction unit configured to pull the rope so as to provide a reverse load to the subject; and a reverse load weight detection unit configured to measure a reverse load weight provided to the subject.

The reverse load weight detection unit may be disposed above the subject, and the reverse load weight detection unit may include: a sensing pulley that is in contact with the rope being pulled to support force due to the reverse load; a force transmission part connected to the sensing pulley to convert a direction of the force so as to transmit the force; and a load cell configured to measure the force transmitted from the force transmission part.

The force transmission part may include: a force transmission shaft having one end, on which the sensing pulley is provided, and the other end, on which a pressing part configured to press a force measuring part of the load cell is provided; and a support part configured to support the force transmission shaft so as to rotate around a rotation shaft provided between the one end and the other end of the force transmission shaft.

The pressing part of the force transmission shaft may be provided below the force measuring part of the load cell.

The rotation shaft may be provided at a central portion between the one end and the other end of the force transmission shaft.

The reverse load device may further include a movable pulley and a fixed pulley, which are provided between the reverse load weight detection unit and the traction unit and around which the rope is partially wound.

The reverse load device may further include a dynamic reverse load compensation unit configured to compensate for the reverse load that varies depending on displacement of the subject, wherein the dynamic reverse load compensation unit may include: a movable member moving in conjunction with the movement of the movable pulley; a fixed member provided to be fixed between the movable member and the movable pulley; and a compressive elastic member interposed between the movable member and the fixed member.

The dynamic reverse load compensation unit may include: a wire connected to and interlocked with the movable pulley and the movable member; and a dynamic compensation unit configured to apply frictional force to the wire.

The traction unit may include: a motor part configured to provide rotational force; and a drum part that rotates by the rotational force to wind the rope around an outer circumferential surface thereof, wherein the reverse load device may further include a winding pulley provided between the fixed pulley and the traction unit to determine a position of the outer circumferential surface on which the rope is wound while performing rotational sliding movement along a winding shaft provided in parallel to the outer circumferential surface.

The reverse load device may further include a stopper configured to determine a rotational sliding range of the winding pulley.

A maximum fleet angle that is determined by a relative position of the stopper with respect to the fixed pulley may be 4° or less.

The reverse load device may further include a horizontal position detection unit provided on at least one of both ends of the winding shaft to detect a relative position of the winding pulley.

The reverse load device may further include a vertical position detection unit configured to measure a relative height of the subject.

The reverse load device may further include a control unit configured to control the traction unit according to the reverse load weight measured by the reverse load weight detection unit.

A gait training system according to another embodiment of the present invention may include: the reverse load device of any one of claims 1 to 14, which is connected to a trainee performing gait exercise to reduce a load of the trainee; a joint motion robot worn on a lower limb of the trainee; and a joint motion robot support unit configured to support the joint motion robot.

The joint motion robot support unit may include a robot height-adjusting module including: a shaft member extending in a vertical direction; a movable member that moves linearly along the shaft member; a connection block which is provided on the movable member and to which the joint motion robot is connected; and a height-adjusting elastic member provided between the movable member and the connection block.

The robot height-adjusting module may further include a worm gear part configured to transmit rotational force to the shaft member so that the shaft member rotates, wherein the movable member into which the shaft member is inserted and screw-connected may move linearly in a vertical direction by the rotating shaft member, and the movable member may be self-locked by the worm gear part.

The gait training system may further include a display unit configured to display gait exercise information including a reverse load weight measured by the reverse load weight detection unit.

The gait training system may further include a robot reverse load unit, wherein the robot reverse load unit may include: a traction wire connected to the joint motion robot; and an elastic unit connected to the traction wire and configured to maintain constant tension.

### ADVANTAGEOUS EFFECTS

In the reverse load device and the gait training system according to an embodiment of the present invention, the reverse load weight or the load amount that is changed depending on the situation may be measured, and the reverse load according to the measured reverse load weight or the load amount may be adjusted and provided to effectively reduce the load of the subject or the gait exercise trainee, thereby effectively adjusting the force (e.g., inertial force) and potential energy generated according to the positional movement of the center of mass or the training conditions, the treatment stages, or the physical conditions of the trainee so that the trainee continuously performs the gait naturally.

In the gait training system of the present invention, the real-time feedback on the reverse load weight or the amount of load reduction during the gait cycle may be received to adjust the reverse load weight by confirming the current status of the operator and the trainee, thereby allowing the operator and the trainee to actively participate in the gait training.

Since the variable reverse load is dynamically compensated according to the displacement of the trainee, even if the body of the trainee moves vertically during the gait training, the change in reverse load that reduces the load of the joint motion robot worn by the trainee may be minimized to reduce the trainee's gait exercise fatigue and improve the efficiency of the gait training.

In addition, even in the unexpected situations such as when the operator accidentally presses the descending or ascending button repeatedly to cause the patient's posture to collapse due to the insufficient reverse load, the change in reverse load may be detected, or the entry into the restricted area may be detected to stop the additional malfunctions, thereby allowing the trainee to actively learn the natural gait movement in the safe gait training environments.

### BRIEF DESCRIPTION OF THE DRAWINGS

FIG. 1 is a perspective view of a reverse load device according to an embodiment of the present invention.
FIG. 2 is a view illustrating an operation of the reverse load device according to an embodiment of the present invention.
FIG. 3 is a view illustrating a configuration of a reverse load weight detection unit according to an embodiment of the present invention.
FIG. 4 is a view illustrating a configuration of a dynamic reverse load compensation unit according to an embodiment of the present invention.
FIG. 5 is a perspective view of a gait training system according to another embodiment of the present invention.
FIG. 6 is a view illustrating a configuration of a joint motion robot support unit according to according to another embodiment of the present invention.
FIG. 7 is a view illustrating an operation of the joint motion robot support unit and the robot reverse load unit according to another embodiment of the present invention.

### MODE FOR CARRYING OUT THE INVENTION

Hereinafter, specific embodiments will be described in more detail with reference to the accompanying drawings. The present invention may, however, be embodied in different forms and should not be construed as limited to the embodiments set forth herein. Rather, these embodiments are provided so that this invention will be thorough and complete, and will fully convey the scope of the present invention to those skilled in the art. In the descriptions, the same elements are denoted with the same reference numerals. In the figures, the dimensions of layers and regions are exaggerated for clarity of illustration. Like reference numerals refer to like elements throughout.

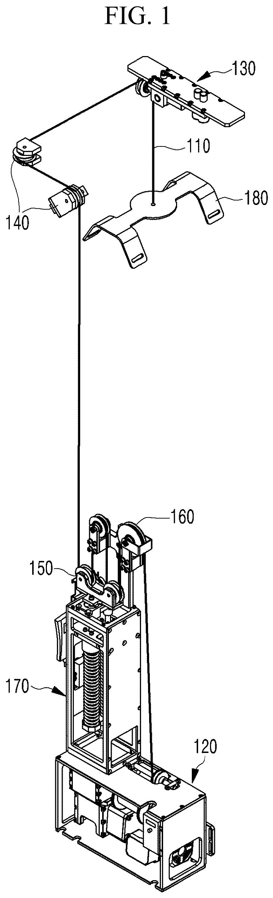

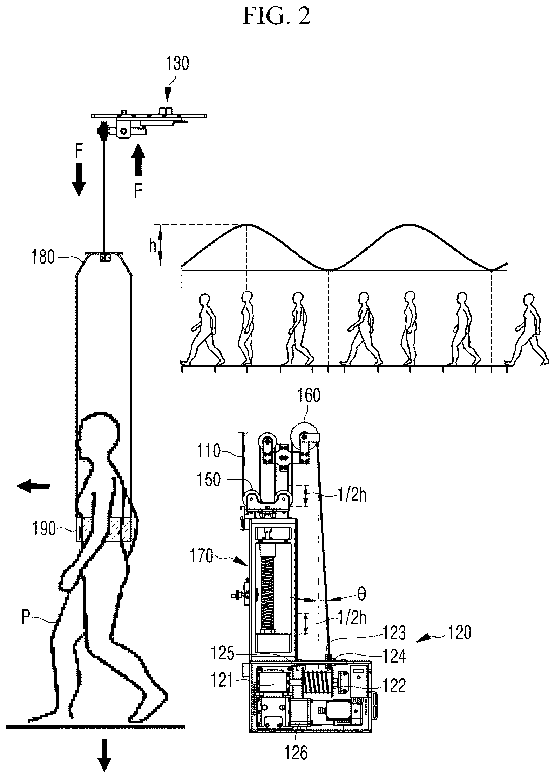

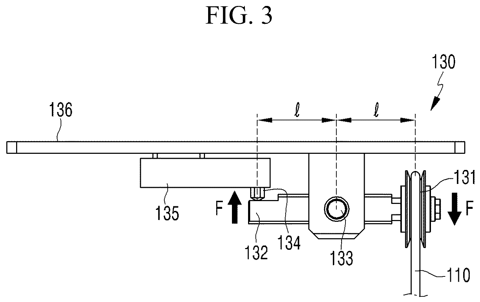

FIG. 1 is a perspective view of a reverse load device according to an embodiment of the present invention, FIG. 2 is a view illustrating an operation of the reverse load device according to an embodiment of the present invention, and FIG. 3 is a view illustrating a configuration of a reverse load detection unit according to an embodiment of the present invention.

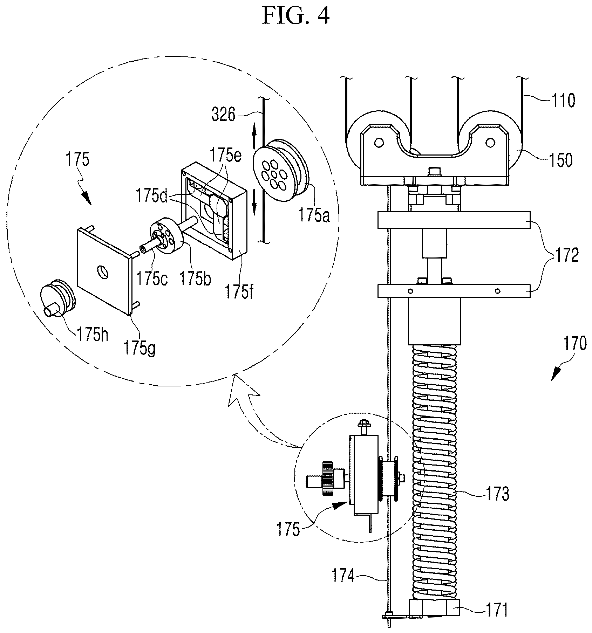

Referring to FIGS. 1 to 4, a reverse load device 100 according to an embodiment of the present invention may include: a rope 110 connected to a subject P; a traction unit 120 that pulls the rope 110 to provide a reverse load to the subject P; and a reverse load weight detection unit that measures a reverse load weight provided to the subject P.

The subject P may include a trainee performing gait exercise or a joint motion robot worn by the trainee. The reverse load device may offset at least a portion of a load of the subject P when it is necessary to reduce the load of the substrate P such as a case in which patients (or trainers) who have difficulty walking have difficulty supporting their own body weight, or trainees do not support the weight of the joint motion robot worn by gait exercise trainees for gait training.

The rope 110 may be provided so that one end thereof is connected to the subject P, and the other end thereof is connected to the traction unit 120, and thus, when the traction unit 120 pulls the rope 110, the subject may be pulled in an upward direction opposite to a direction of the load of the subject due to gravity to support the subject P vertically, thereby providing a reverse load that reduces the load of the subject P. The rope 110 may be made of a material such as nylon, polyester, or polypropylene having appropriate elastic elongation properties.

The traction unit 120 may be connected to the other end of the rope 110 to provide traction force for pulling the rope 110, thereby supporting the subject P connected to one end of the rope 110 upward and thus providing the reverse load to the subject P.

The reverse load weight detection unit 130 may measure a reverse load weight provided to the subject P through the rope 110 pulled by the traction unit 120 to monitor an amount of load reduction provided to the subject P in real time.

The reverse load may be monitored in real time using the reverse load weight detection unit 130, the gait exercise trainee, who is the subject P of the reverse load, may learn natural gait by adjusting the amount of load reduction imparted to the trainee's own lower limb (or an amount of traction for pulling the rope 110) according to a physical recovery stage and real-time physical conditions, and thus, the trainee may conduct the training that maintains a natural gait pattern. The amount of load reduction imparted to the lower limb of the trainee may vary from the entire load of the trainee when the trainee is completely spaced apart from the ground to "0" when the trainee is free standing on the ground.

In addition, the real-time conditions of the trainee may be detected, and the load weight to be reduced may be adjusted due to reasons such as a lack of concentration or physical strength of the trainee, or an adaptation process according to new training conditions. Additionally, the unexpected situations, such as a patient's posture collapsing due to insufficient reverse load caused by an operator's operational error, may be detected to stop additional malfunctions, thereby protecting the subject such as the trainee or the joint motion robot.

The rope 110 pulled by the traction unit 120 may be connected to the subject P via a plurality of pulleys 140, 150, and 160 to distribute pulling force by the traction unit 120, and in order to offset the load of the subject P, the reverse load may may be applied in a vertical direction opposite to a direction of the load of the subject P, and thus, in order to measure an exact reverse load, the reverse load detection unit 130 may be disposed above the subject P without any other mechanical elements such as the pulley between the subject P and the reverse load detection unit 130.

In general, the trainee performing the gait exercise may wear a harness 190 on the body to realize stable support and simultaneously pull a plurality of connection lines connected to the harness 190 using the traction bar 180 and the rope 110 connected to the traction bar 180. The trainee may perform the gait training according to a gait cycle divided into a stance phase and a swing phase, and during the gait, the trainee may perform two step movement such as a left step and a right step, and thus, the trainee's body may be naturally tilted forward, backward, left, and right, as well as upward and downward. During the gait exercise of the trainee, the rope 110 connected to the traction bar 180 may sway not only forward and backward but also upward and downward depending on the movement of the trainee's body. Thus, when a load cell that directly measures the load or force is directly connected to the rope 110, an unstable result value may be obtained due to the swaying rope 110, and an error value may be obtained by measuring force in a direction unrelated to the reverse load.

In order to solve these problems, the reverse load weight detection unit 130 of the present invention may include a sensing pulley 131 that is in contact with the rope 110 being pulled and supports the force due to the reverse load; a force transmission part that is connected to the sensing pulley 131 to convert a direction of the force so as to transmit the force; and a load cell 135 that measures the force transmitted from the force transmission part.

The sensing pulley 131 may be a mechanical element that is first in contact with the rope 110 connected to the subject P while moving in the direction of being pulled and may support the force for the reverse load that reduces the load of the subject P. The rope in front of the sensing pulley 131 (i.e., the rope between the subject, which is the trainee, and the sensing pulley 131) sways upward, downward, forward, backward, left, and right according to the movement of the subject P, but the rope in the back of the sensing pulley 132 may be connected to the traction unit 120 via a first direction change pulley 140 or the like without the swaying.

The force transmission part may transmit the force in the upward, downward, forward, backward, left, and right directions generated by the rope 110 to convert the force into a single direction (e.g., reverse load direction) in proportion to tension applied to the rope 110.

The load cell 135 may not directly measure the force caused by the swaying rope 110 by directly contacting the rope 110, but rather measure the force transmitted in the single direction by the force transmission part, thereby enabling accurate measurement of the reverse load weight, excluding unstable results caused by the swaying rope 110 or results of measuring the force in a direction unrelated to the reverse load.

The force transmission part may include a force transmission shaft 132 provided with the sensing pulley 131 at one end thereof and a pressing part for pressing the force measuring part 134 of the load cell 135 at the other end; and a support part that supports the force transmission shaft 132 so as to rotate around a rotation shaft 133 provided between the one end and the other end of the force transmission shaft 132. Here, the pressing part of the force transmission shaft 132 may be provided below the force measuring part 134 of the load cell 135.

The load of the trainee, which is the subject P, or a portion of the load may be transmitted through the rope tension T, and the rope 110 that is wound around and in contact with the sensing pulley 131 may transmit the force F applied downward to the sensing pulley 131. When the support part rotatably supports the force transmission shaft 132 around the rotation shaft 133 provided between one end the other end of the force transmission shaft 132, if the force F applied downward to the sensing pulley 131 connected to one end of the force transmission shaft 132 is transmitted, the other end of the force transmission shaft 132 may apply the force F upward while the force transmission shaft 132 may rotates around the rotation shaft 133. The rotation shaft 133 of the support part may be spaced a predetermined height from a detection unit fixing frame 136 so that the force transmission shaft 132 is rotatable.

The force transmission shaft 132 and the support part, which supports the force transmission shaft 132 so that the force transmission shaft 132 is rotatable around the rotation shaft 133, may form a seesaw structure, and the sensing pulley 131 that is in contact with the rope 110 to receive the force applied downward may act as a force point, the rotation shaft of the support part may act as a fulcrum, and the pressing part provided on a top surface of the other end of the force transmission shaft 132 may act as an application point. That is, the force of the rope 110 that sways upward, downward, forward, backward, left, and right may be converted into a vertical component of force (upward force) in the pressing part by the seesaw structure formed by the force transmission shaft 132 and the support part.

Since the reverse load is achieved by vertically pulling the subject having the load upward, the pressing part provided on the top surface of the other end of the force transmission shaft 132 is provided below the force measuring part 134 of the load cell, and thus, the pressing part provided on the top surface of the other end of the force transmission shaft 132 may apply upward force to the force measuring part 134 of the load cell 135 to sense the pressing vertical force or load, thereby accurately measuring the reverse load weight.

The detection unit fixing frame 136 may be fixed to a structure such as a frame part 700 of the gait training system and thus may not move. The load cell 135 may be partially in contact with the detection unit fixing frame 136, and the remaining portion may be spaced, and thus, deformation may occur due to the upward force that presses the force measuring part 134, and the reverse load weight may be measured by outputting an electric signal in proportion to a magnitude of the deformation.

In order to change only the direction while maintaining the magnitude of the force by converting the downward force transmitted by the rope 110 into the upward force that presses the force measuring part 134 at the pressing part provided on the top surface of the other end of the force transmission shaft 132 by the seesaw structure constituted by the force transmission shaft 132 and the support part, the rotation shaft 133 may be provided at a center between one end and the other end of the force transmission shaft 133. That is, a length 1 between one end of the force transmission shaft 132 and the rotation shaft 133 may be the same as a length 1 between the rotation shaft 133 and the other end of the force transmission shaft 132.

The reverse load device 100 may further include a movable pulley 150 and a fixed pulley 160, which are provided between the reverse load weight detection unit 130 and the pulley 120 to effectively utilize the traction unit 120 that provides the traction force, and around which the rope 110 is at least partially wound. The rope 110 that is wound around the movable pulley 150 and the fixed pulley 160 and connected to the traction unit 120 may be pulled by the traction unit 120 to provide a static reverse load to the subject P.

The movable pulley 150 may lift the subject with less force than when the traction unit 120 directly provides the reverse load to the subject. Thus, if a plurality of movable pulleys 150 are provided, the traction unit 120 may obtain more benefit in the force that pulls the subject. For example, in this embodiment, two movable pulleys 150 may be provided. However, the number of provided movable pulleys 150 is not limited thereto and may vary.

The rope 110 may be wound around the movable pulley 150 to move upward and downward according to the movement of the rope 110. When the trainee performs the gait exercise, a height displacement h may occur in the gait cycle. Depending on the height displacement h of the gait trainee, the movable pulley 150 around which the rope 110 connected to the trainee (subject) is wound may also experience a height displacement difference h/2.

The fixed pulley 160 may be disposed at an upper side of the movable pulley 150 and fixed by a fixed member. The rope 110 may be at least partially wound around the fixed pulley 160, and the fixed pulley 160 may be provided as many movable pulleys 150 as there are available.

The traction unit 120 may pull the rope 110 to provide the reverse load based on the load of the trainee P wearing the harness 190 before the trainee performs the gait training in a static or stationary state. Thus, when a center of mass of the body moves upward and downward according to the gait cycle of the stance and swing phases in the dynamic state in which the trainee is performing the gait training to cause the displacement h, the reverse load that varies according to the displacement may not be compensated. The variable reverse load may cause discomfort to the gait trainee during the gait training and prevent the gait trainee from being supported stably, thereby leading to safety accidents. Thus, it is necessary to compensate for the variable reverse load according to the change in force (inertial force) and potential energy generated by the trainee's gait in the dynamic state during the gait training.

The reverse load device of the present invention may further include a dynamic reverse load compensation unit 170 that compensates for the reverse load that varies depending on the displacement h of the subject P.

The dynamic reverse load compensation unit 170 may include: a movable member 171 that moves in conjunction with the movement of the movable pulley 150; a fixed member 172 that is provided to be fixed between the movable member 171 and the movable pulley 150; and a compressive elastic member 173 that is interposed between the movable member 171 and the fixed member 172.

When the trainee (or subject) is pulled to ascend, the tension of the rope 110 may increase, and the movable pulley 150 wrapped around the rope 110 may also ascend.

The movable member 171 may be connected to the movable pulley 150 by a pressing shaft (not shown), so that the movable pulley 150 moves in conjunction with the movement. The movable member 171 and the movable pulley 150 may be connected to one end and the other end of the pressing shaft, respectively, so as to be maintained to be spaced a certain distance from each other.

The fixed member 172 may be provided between the movable member 171 and the movable pulley 150 and may be fixed to be maintained at a constant position. The fixed member 172 may be provided with a through-hole into which the pressing shaft is inserted to be movable along the movable member 171 and the movable pulley 150.

The compressive elastic member 173 may be interposed between the movable member 171 and the fixed member 172, so that one end of the compressive elastic member 173 is fixed to the movable member 171, and the other end of the compressive elastic member 173 is fixed to the fixed member 172. A structure that is pressed by the movable member 171 that is interlocked together when the movable pulley 150 ascends and the fixed member 172 may be provided. The compressive elastic member 173 may be provided to surround the pressing shaft so that the compressive elastic member 173 is guided to be pressed only in the vertical direction or the upward and downward direction.

When the height displacement h of the trainee occurs according to the gait cycle, the height of the movable pulley 150 and the movable member 171 may also be changed by h/2, and thus, a length of the compressive elastic member 173 may be additionally pressed by h/2. The change in elastic force caused by the change in the amount of compression of the compressive elastic member 173 according to the height displacement of the trainee may compensate for the change in the load by reducing the amount of displacement of the movable pulley 150.

As the trainee gaits, the displacement of the trainee's body moving vertically naturally may change not only the potential energy but also the additional force (inertial force) generated at the point of inertia generation (the point of upward/downward direction change during the gait training). That is, the reverse load may be variable due to the inertial force as well as the potential energy that is changed during the trainee's gait process. The compressive elastic member 173 may compensate for the reverse load by reducing the change in potential energy according to the change in the height of the trainee, but may have limitations in compensating for the change in dynamic reverse load due to the inertial force generated according to the trainee's gait cycle.

Thus, the dynamic reverse load compensation unit 170 may further include: a wire 174 that is connected to and interlocked with the movable pulley 150 and the movable member 171; and a dynamic compensation unit 175 that applies frictional force to the wire 174.

When the subject such as the trainee moves upward and downward, the wire 174 connected between the movable pulley 150 that moves according to the movement of the subject and the movable member 171 also moves in conjunction with each other. When the dynamic compensation unit 175 applies the frictional force to the wire 174 that is interlocked with the movement of the subject such as the trainee, additional force generated by the inertia according to the displacement of the subject such as the trainee moving upward and downward may be offset or reduced to effectively suppress the variable reverse load.

The dynamic compensation unit 175 may include: a dynamic compensation pulley 175a that is at least partially wound around the wire 174 to rotate in contact with each other; cams 175b and 175c that are connected to the dynamic compensation pulley 175a to rotate; and an elastic body 175d that provides the frictional force to the rotating cams 175b and 175c. The rotation shaft 175c of each of the cams may be disposed eccentrically from a center of gravity of the cam part 175b. That is, a rotational radius of one side and the other side of the cam part 175b by the rotation shaft 175c may vary, and thus, a magnitude of the frictional force by the elastic body 175d or the contact member 175e connected to the elastic body 175d may be adjusted. The cams 175b and 175c, the elastic body 175d, etc., may be protected by a case 175f and a cover 175g.

In the inside the dynamic compensation unit 175, the elastic body 175d may apply the frictional force to the cams 175b and 175c in a direction different from the rotational direction of the cams 175b and 175c to prevent the rotation of the cams 175b and 175c and the pulley 175a, thereby preventing the movement of the wire 174 that is trying to move upward and downward in conjunction with the subject such as the trainee and thus effectively suppressing the variable reverse load.

Two sets of elastic body 175d and contact member 175e may be provided in the form that intersect (orthogonally intersect) each other at an angle of 90° with respect to the cam 175b, and each set of elastic body 175d and contact member 175e may generate first torque and second torque, so that an amount of inertia generated by their combination may exhibit a form similar to a sine wave waveform graph generated when the trainee gaits. Thus, when the variable reverse load is compensates dynamically using the dynamic compensation unit 175, a constant reverse load weight may be provided to the trainee even while the gait.

The dynamic compensation unit 175 may be provided with a control part 175h that controls relative positions of the cams 175b and 175c. The control part 175h may be connected to the cams 175b and 175c to move the cam part 175b, thereby setting a time point at which the cam part receives elastic force from the elastic body 175d. Thus, a starting point, an amount of dynamic compensation, the gait cycle, or a phase difference for dynamic compensation may be set according to the trainee's situation.

The traction unit 120 for pulling the rope 110 may include: a motor part 121 that provides rotational force; and a drum part 122 that rotates by the rotational force to wind the rope around an outer circumferential surface thereof; and the reverse load device 100 may further include a winding pulley 123 that is provided between the fixed pulley 160 and the traction unit 120 to determine a position of the outer circumferential surface on which the rope is wound while performing rotational sliding movement along a winding shaft provided in parallel to the outer circumferential surface.

The motor part 121 may provide the rotational force in a desired direction, and the drum part 122 may rotate by the rotational force provided by the motor part 121 so that the rope 110 is wound or released on the outer circumferential surface to provide the reverse load to the subject.

First, the other end of the rope 110 connected to the subject may be fixed to the outer circumferential surface of the drum part 122, and as the drum part 122 rotates, the rope 110 may be wound or released on the outer circumferential surface. In order to provide a constant load depending on the number of rotations of the drum part 122 so that the rope 110 is wound sequentially in a single line without overlapping or twisting each other on the outer circumferential surface of the drum part 122, it is necessary to determine the position of the outer circumferential surface on which the rope 110 is wound.

The winding pulley 123 may be provided between the fixed pulley 160 and the traction unit 120 to determine the position of the outer circumferential surface on which the rope 110 is wound while performing the rotational sliding movement along the winding shaft provided parallel to the outer circumferential surface of the drum part 122.

Since the rope 110 passes through the winding pulley 123 provided between the fixed pulley 160 and the traction unit 120 and then is wound around the outer circumferential surface of the drum part 122, when the winding pulley 123 is slid according to the number of turns of the rope that increases or decreases due to the rotation of the drum part 122, the position of the outer circumferential surface on which the rope 110 is wound may be determined.

The winding pulley 123 performs the rotational sliding motion by the winding shaft and a linear bushing. If a gap between the fixed pulley 160 and the drum part 122 is short, the winding pulley 123 may move by a separate winding motor in proportion to a rotational speed of the drum part 122. If the gap between the fixed pulley 160 and the drum part 122 is sufficient, the winding pulley 123 may move automatically by the force of the rope 110 being wound around the outer circumferential surface of the drum part 122 without a separate device.

The reverse load device 100 may further include a stopper 124 that determines a rotational sliding range of the winding pulley 123.

The traction unit 120 may provide the reverse load to the subject by winding the rope 110 around the outer circumferential surface of the drum part 122. To prevent the rope 110 from being separated from the drum part 122, the stopper 124 may be installed on the winding shaft to determine the rotational sliding range of the winding pulley 123. As the number of drum turns of the rope 110 increases or decreases, the height of the subject P may increase or decrease, and the position of the stopper 124 may be determined by setting in advance the magnitude of the amount of traction that pulls the subject.

A maximum fleet angle determined by the relative position of the stopper 124 to the fixed pulley 160 may be 4° or less.

When the rope 110 passing through the fixed pulley 160 has a fleet angle of 4° or less, which is an angle inclined with respect to the vertical direction, the rope 110 may be wound around the outer circumferential surface of the drum 122 that rotates sequentially without causing rope winding problems such as twisting or double winding, and without causing the winding pulley to be separated, even without a separate device such as the winding motor. If the fleet angle is greater than 4°, the rope winding problems may occur, and the winding motor or the like may be required to sequentially wind the rope in position. The maximum pleat angle at which the rope winding problems do not occur may vary depending on surface conditions of the drum part 122. For example, in the case of a flat drum having a smooth surface, the maximum pleat angle is 2°, and in the case of a grooved drum having a grooved surface, the maximum pleat angle may increase up to 4°. Since the stopper 124 is disposed relative to the fixed pulley 160 so that the maximum fleet angle is 4° or less, it is possible to suppress malfunctions that may occur during the use of the traction unit 120 in a simple manner.

The reverse load device 100 may further include a horizontal position detection unit 125 provided on at least one of both ends of the winding shaft to detect the relative position of the winding pulley 123.

An amount of traction by which the traction unit 120 pulls the rope 110 may be determined according to the number of turns or the number of turns of the rope 110 wound around the outer circumferential surface of the drum part 122. That is, when the number of turns of rope decreases, the subject descends, and when the number of turns of rope increases, the subject ascends. Since the number of turns of rope or the turned position of rope may be confirmed by detecting the position of the winding pulley 123 that guides the rope 110 to the winding position, the horizontal position detection unit 125 that detects the relative position of the winding pulley 123 may be provided on at least one of both the ends of the winding shaft to monitor the amount of traction.

When the horizontal position detection unit 125 is disposed inside the drum part 122, if the number of turns of rope is reduced to allow the subject to descend, the winding pulley 123 may move toward the inside of the drum part 122 to gradually get closer to the horizontal position detection unit 125. On the other hand, when the horizontal position detection unit 125 is disposed outside the drum part 122, if the number of turns of rope increases to allow the subject to ascend, the winding pulley 123 may move toward the outside of the drum part 122 to gradually get closer to the horizontal position detection unit 125.

It is also possible to install the horizontal position detection unit 125 simultaneously on the inside and outside of the drum part 122. The horizontal position detection unit 125 disposed inside the drum part 122 may act as a downward limit sensor, and the horizontal position detection unit 125 disposed outside the drum part 122 may act as an upward limit sensor. When the horizontal position detection unit 125 detects that the winding pulley 123 enters a preset downward limit area or an upward limit area, a detection signal may be used to provide feedback as a visual and/or audible alarm, and damage of the reverse load device 100 or damage of the subject such as the gait trainee may be prevented by preventing malfunctions such as continuous ascending or descending. Particularly, the horizontal position detection unit 125 provided inside the drum part 122 that acts as the descent limit sensor may prevent the patient's posture from collapsing due to the insufficient reverse load caused by the trainee descending too much.

The horizontal position detection unit 125 may not necessarily need to detect an absolute position of the winding pulley 123, and a proximity sensor that may only confirm that the winding pulley 123 approaches a predetermined position may be sufficient.

The reverse load device 100 may further include a vertical position detection unit that measures the relative height of the subject P.

The vertical position detection unit (not shown) may be attached to the frame part 700 supporting the reverse load device 100 to measure the relative height of the subject P that ascends or descends as the traction unit 120 pulls the rope 110. Similarly to that the horizontal position detection unit 125 detects the relative position of the winding pulley 123 and is used as the downward limit sensor or the upward limit sensor, the vertical position detection unit may be used as the downward limit sensor or the upward limit sensor that monitors whether the subject P enters a preset downward limit area or upward limit area. When the vertical position detection unit detects that the subject P has entered the downward limit area or the upward limit area, it may be used to provide feedback as a visual and/or audible alarm, and damage of the reverse load device 100 or damage of the subject such as the gait trainee may be prevented by preventing malfunctions such as continuous ascending or descending. The vertical position detection unit may not necessarily need to detect the absolute position of the subject P, and the proximity sensor that may only confirms that the subject P approaches a predetermined position may be sufficient.

In the case of the gait trainee, since the trainee is wearing the joint motion robot or needs to the train gait while enduring a certain load weight, it may be structurally difficult to precisely sense whether the trainee's lower limb enter the lower limit area using the vertical position detection unit. Thus, the horizontal position detection unit 125 may be used as the lower limit sensor, and the vertical position detection unit that may directly detect the relative position of the gait trainee (or the traction bar 180, etc.) may be used as the upward limit sensor.

The reverse load device 100 may further include a control unit 126 that controls the traction unit 120 according to the reverse load weight measured by the reverse load weight detection unit 130.

The control unit 126 may control a rotational position, a rotational speed, or a rotational direction of the drum part 122 by adjusting an electrical control signal input to the motor part 121 and may control the motor part 121 of the traction unit 120 according to the reverse load weight measured by the reverse load weight detection unit 130.

For the trainee who performs the gait exercises, depending on the trainee's conditions or the purpose of the gait training, the gait exercise may be performed in a fully ascending state (maximum resistance load) or while enduring a portion of the trainee's load (an intermediate state between "0" resistance load and the maximum resistance load). In the present invention, the traction unit 120 may be controlled while measuring the load provided to the trainee using the load weight detection unit 130 according to the trainee's conditions or the purpose of the gait training. In addition, the amount of load reduction (or reverse load weight) that is changed in trainee's gait cycle may be monitored in real time by the load reduction detection unit 130 and fed back, and thus, the operator and/or the trainee may confirm a current gait exercise status to actively participate in the gait exercise.

It is safer for the subject P such as the trainee to be pulled at a slower speed than when the trainee is not present. The control unit 126 may change the pulling speed according to the reverse load weight of the trainee provided in real time by the reverse weight detection unit 130 to improve operability by rapid pulling when the trainee is not connected, and enable slow and safe pulling when the trainee is connected.

In addition, when the traction bar 180 touches the trainee's head or the trainee's lower limb touches the ground while pressing an up button of a remote control (not shown) that operates the reverse load device 100, and the change in the reverse load weight may be detected by the reverse load weight detection unit 130, the lowering may no longer occur, and the control unit 126 may react only to a down button.

Additionally, when the up button of the remote control (not shown) is continuously pressed so that the traction bar 180 continues to ascend and enters the upward limit area, the control unit 126 may be respond only to the operation of the down button without ascending any further even when the up button is pressed. Conversely, if the winding pulley 123 enters the downward limit area by continuously pressing the down button on the remote control, the down button may be pressed so that the control unit 126 does not descend any further and only responds to the operation of the up button.

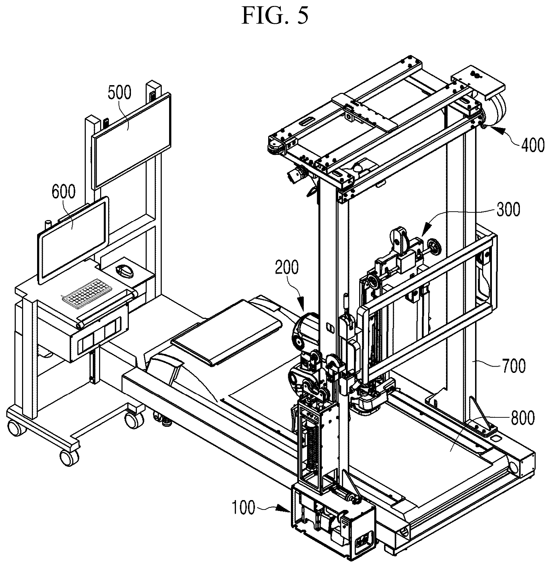

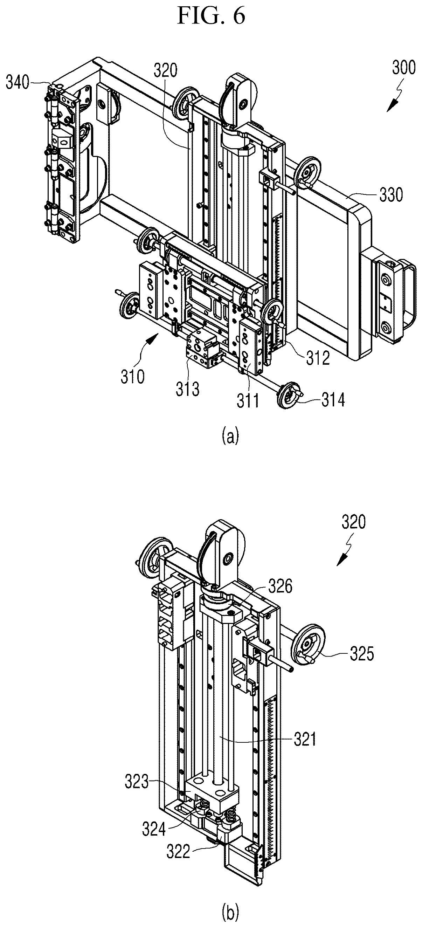

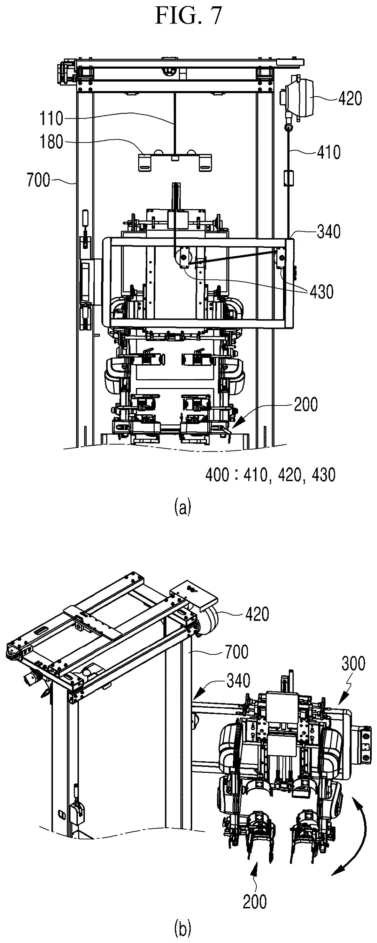

FIG. 5 is a perspective view of a gait training system according to another embodiment of the present invention, FIG. 6 is a view illustrating a configuration of a joint motion robot support unit according to according to another embodiment of the present invention, and FIG. 7 is a view illustrating an operation of the joint motion robot support unit and the robot reverse load unit according to another embodiment of the present invention.

In describing the gait training system according to another embodiment of the present invention, any details that are duplicated with those described above in relation to the reverse load device according to an embodiment of the present invention will be omitted.

Referring to FIGS. 5 to 7, a gait training system according to another embodiment of the present invention may include: a reverse load device 100 according to an embodiment of the present invention, which is connected to a trainee performing gait exercise to reduce a load of the trainee; a joint motion robot 200 that is worn on a lower limb of the trainee; and a joint motion robot support unit 300 that supports the joint motion robot 200.

The reverse load device 100 may be a device that is connected to the trainee performing the gait exercise as a subject P to reduce the load of the trainee and may include: a rope 110 connected to the trainee P; a traction unit 120 that pulls the rope 110 to provide a reverse load to the subject P; and a reverse load weight detection unit 130 that measures the reverse load provided to the subject P.

The trainee performing the gait exercise may wear a harness 190 on a body to realize stable support and simultaneously pull a plurality of connection lines connected to the harness 190 using a traction bar 180 and the rope 110 connected to the traction bar 180.

The joint motion robot 200 may be formed in a form that is worn on the lower limb of the trainee. For example, the joint motion robot 200 may include a hip joint robot worn on a hip joint, a knee joint robot worn on a knee joint, or an ankle joint robot worn on an ankle joint among lower body joints and may be used by selecting only one joint robot among the hip joint robot, the knee joint robot, and the ankle joint robot depending on the trainee. The joint motion robot 200 may be mounted on both legs of the trainee and operate to assist the gait of the trainee having gait disability. In addition, a length adjuster that may be adjusted according to a length of each of the trainee's legs may be provided between the joint robots of the joint motion robot 200. The length adjuster may be automatically adjusted to be suitable for the trainee's body type, and if an error occurs after the automatic length adjustment, a segment length may be finely adjusted automatically or manually.

The joint motion robot support unit 300 may not only support and sustain the joint motion robot 200 to at least partially offset the load of the joint motion robot 200, but also may adjust the height of the joint motion robot 200 as needed so as to be suitable for the training by adjusting the power and energy generated from the trainee's gait. Thus, when the trainee wears the joint motion robot 200 to perform the gait exercise, the trainee may perform natural gait exercise without feeling the load of the joint motion robot 200.

The joint motion robot support unit 300 may include a robot height-adjusting module 320 including: a shaft member 321 extending in a vertical direction; a movable member 322 that moves linearly along the shaft member 321; a connection block 323 which is provided on the movable member 322 and to which the joint motion robot 200 is connected; and a height-adjusting elastic member 324 provided between the movable member 322 and the connection block 323.

The joint motion robot 200 may be supported by being connected to the connection block 323 by a robot connection module 310 including a pair of coupling parts 311 that are respectively connected to the joint motion robots 200 provided in a pair at left and right sides; and a gap-adjusting part 312 that is capable of adjusting the gap between the pair of coupling parts 311 according to a size of a pelvis of the trainee. Here, the pair of joint motion robots 200 may be detachably connected to the pair of coupling parts 311, respectively, and thus, the joint motion robot 200 suitable for the length of the lower limb of the trainee having various physical conditions such as a child or an adult may be selected and connected. The robot connection module 310 may further include a hip pad support part 313 that moves linearly backward and forward by rotational motion transmitted from a rotational gear part 312.

The shaft member 321 may be provided in a form that extends vertically or vertically, and thus, the movable member 322 may be guided to move linearly along the shaft member 321. For example, in a structure in which the shaft member 321 having a screw thread formed on an outer circumferential surface thereof is inserted into the movable member 322 having a screw thread formed on an inner surface of an insertion hole and is screw-connected, when the shaft member 321 rotates, the movable member 322 may be prevented from rotating together with the shaft member 321 by a back plate or the like and may move linearly in a longitudinal direction (i.e., vertical direction) of the shaft member 321.

When the trainee performs the gait exercise while wearing the joint motion robot 200, the joint motion robot 200 may need to move upward and downward according to a gait cycle, and a position of a center of gravity of the joint motion robot 200 may be continuously changed due to displacement that occurs as the joint motion robot 200 moves. Thus, a load of the joint motion robot 200 may not be evenly offset, and thus, the trainee may feel some of the load of the joint motion robot 200. In addition, when the joint motion robot 200 operates, the joint motion robot 200 initially has an inertia to remain still, it may be difficult to move the joint motion robot 200. However, once the joint motion robot 200 moves, it may have an inertia to continue moving, and thus, it may be easy to move. Thus, if the same force is applied to the joint motion robot 200 from the start to the end of the training, the force with which the joint motion robot 200 moves due to inertia may be changed, and the trainee may detect the change in dynamic load caused by the change in force.

In the present invention, the robot connection module 310 to which the joint motion robot 200 is coupled is not supported by being connected to the movable member 322 that moves linearly in the vertical direction, but may be supported by being connected to the connection block 323 that is provided spaced apart from the movable member 322. Here, a height-adjusting elastic member 324 may be provided between the movable member 322 and the connection block 323. The height of the movable member 322 that moves linearly in the vertical direction may be changed by this structure to not only easily adjust the height of the joint motion robot 200, but also support the joint motion robot 200 using the connection block 323 provided on the height-adjusting elastic member 324, and thus, the variable dynamic load of the joint motion robot 200 may be effectively compensated for by the elastic force of the height-adjusting elastic member 324.

The robot height-adjusting module 320 may further include a worm gear part 326 that transmits the rotational force to the shaft member 321 to rotate the shaft member 321. Here, the movable member 322 into which the shaft member 321 is inserted and connected by a screw may move linearly in the vertical direction by the rotation shaft member 321, and the movable member 322 may be self-locked by the worm gear part 326.

When a handle 325 is turned, the shaft member 321 may be connected to the worm gear part 326 constituted by a worm and a worm wheel, and the movable member 322 into which the shaft member 321 is inserted and connected by the screw may move linearly in the vertical direction by the rotating shaft member 321. The movable member 322 may be connected to a guide bushing/shaft set (not shown) to enable stable vertical movement. The worm gear part 326 includes a worm coupled to a driving shaft connected to the handle 325 and a worm wheel screw-coupled to the worm, and the worm wheel may be coupled to a shaft member 321 to transmit driving force so that the shaft member 321 rotates.

The movable member 322 may be self-locked by the worm gear part 326, and thus, the height of the movable member 322 adjusted by the handle 325 may remain at a corresponding height even when external force such as an impact caused by the gait is applied. The worm gear part 326 may be self-locked so that the worm does not rotate with the worm wheel depending on a material of the worm gear, a lead angle, an operating precision, a type of bearing, a lubricant, etc. When the worm gear part 326 is self-locked, the shaft member 321 and the movable member 322 connected to the worm gear part 326 may also be self-locked. The self-locking may be controlled by various mechanical elements of the worm gear. If the lead angle in a single-row worm gear is maintained at an angle of 5° or less, the self-locking may occur stably and reproducibly under gait motion conditions. The movable member 322 that is self-locked by the worm gear part 326 may be used, and thus, the joint motion robot 200 may be prevented from descending below a preset height without using additional brakes or compression fixing methods to also perform a safety device function in cases such as when the pulling/descending operation is mistaken, or the patient's posture collapses.

The gait training system may further include a display unit 500 that displays gait exercise information including a reverse load weight measured by the reverse load weight detection unit 130.

The display unit 500 may visually display the gait exercise information including the reverse load weight measured by the reverse load weight detection unit 130 using a display or may display the gait exercise information audibly, such as by generating an alarm with a different sound depending on the reverse load weight measured by the reverse load weight detection unit 130. For example, when the trainee or operator receives feedback on the gait exercise information including the reverse load weight measured in real time by the reverse load weight detection unit 130 displayed on the display while performing the gait exercise, the trainee or operator may confirm the current state of the gait exercise and actively participate in the gait exercise accordingly.

The gait exercise information may include not only the load, but also trainee information, a gait speed, a gait exercise record, a gait time, whether the trainee has entered the upward limit/downward limit area, a height of the joint motion robot, a gait progress status of the joint motion robot 200 in the forward or reverse direction, a joint angle and force, and a current time point during the designated gait cycle.

The gait training system may further include a robot reverse load unit 400 provided with: a traction wire 410 connected to the joint motion robot 200; and an elastic unit 420 connected to the traction wire 410 and maintaining constant tension.

A traction amount equal to the weight (load) of the joint motion robot 200 may be supported upward by the robot reverse load unit 400.

The traction wire 410 may have one end directly or indirectly connected to the joint motion robot 200 and the other end connected to the elastic unit 420 that maintains the tension of the traction wire constantly via at least one second direction change pulley 430 to provide a reverse load that compensates for the load of the joint motion robot 200.

The elastic unit 420 may serve to apply the constant tension to the joint motion robot 200. The elastic unit 420 may have a section that provides constant force without increasing or decreasing in proportion to the change in length of the traction wire 410 and may provide the constant force even for the vertical movement of the joint motion robot 200. For example, the elastic unit 420 may be a spring balancer. Thus, the elastic unit 420 may pull the joint motion robot 200 with the same force regardless of whether the joint motion robot 200 moves to any position, such as 100 mm, 500 mm, or 800 mm from the ground. Thus, when the joint motion robot 200 moves upward, the elastic unit 420 may apply the constant tension to provide static compensation, and thus, the joint motion robot 200 may move vertically with little force. The elastic unit 420 may apply tension based on the load (or weight) of the joint motion robot 200 before performing the gait training in a static, i.e., stationary state.

The joint motion robot support unit 300 may further include a connection frame 330 that supports the robot height-adjusting module 320 so as to be connected to a frame part 700. The connection frame 330 may be hingedly connected to the frame part 700 by a hinge part 340 at one end to form an opening/closing structure and thus may be opened and closed so that the trainee easily enters and exits the gait training system to allow the joint motion robot 200 to move between a trainee boarding position and a standby position (see FIG. 7). The hinge part 340 may be provided at one end of the connection frame 330 and be connected to one side of the frame part 700, and a fixing unit such as a latch may be provided at the other end and be connected to the other side of the frame part 700.

The traction wire 410 may be damaged while the connection frame 330 is opened and closed. If an extension direction of the traction wire 410 extending from the elastic unit 420 (i.e., provided between the elastic unit 420 and the first second direction change pulley 430) is disposed in parallel to the rotation shaft direction of the hinge part 340, since an interference does not occur between the structures, the traction wire 410 may be suppressed or prevented from being damaged.

Since the operator makes an operational mistake, such as applying of force to the joint motion robot 200 and pressing the joint motion robot 200 while the connection frame 330 is opened and closed, to cause a sudden change in height of the joint motion robot 200, the connection frame 330 may be safely opened and closed after fixing the robot connection module 310 connected to the joint motion robot 200 through a robot fixing pin.

The gait training system of the present invention may further include a treadmill 800 that provides a bottom surface for the trainee to sustain the gait training in a fixed position, or a manipulation unit 600 for the operator to operate the gait training system.

The manipulation unit 600 may selectively store information received from the joint motion robot 200, the reverse load weight detection unit 130, the treadmill 800, etc., and may display in real time the operation display that displays the reverse load, the trainee information, the gait speed, the gait exercise record, the gait time, whether the trainee has entered the upward limit/downward limit area, the height of the joint motion robot, the forward or reverse gait progress of the joint motion robot 200, the joint angle and force, and which time point in the designated gait cycle the current time point is, in numbers or graphs, and the operator may operate the gait training system customized for the trainee using these information. Information such as images and sounds displayed on the control unit 600 may be shared with the display unit 500 so that the trainee confirms the information by oneself.

As described above, in the reverse load device and the gait training system of the present invention, the reverse load weight that is changed depending on the situation such as the gait cycle or the gait exercise conditions may be measured, and the reverse load may be adjusted and provided according to the measured reverse load weight to effectively reduce the load of the subject or the gait exercise trainee, thereby effectively adjusting the force (e.g., inertial force) and potential energy generated according to the positional movement of the center of mass or the training conditions, the treatment stages, or the physical conditions of the trainee so that the trainee continuously performs the gait naturally.

In the gait training system of the present invention, the real-time feedback on the reverse load weight or the amount of load reduction during the gait cycle may be received to adjust the reverse load weight by confirming the current status of the operator and the trainee, thereby allowing the operator and the trainee to actively participate in the gait training.

Since the variable reverse load is dynamically compensated according to the displacement of the trainee, even if the body of the trainee moves vertically during the gait training, the change in reverse load that reduces the load of the joint motion robot worn by the trainee may be minimized to reduce the trainee's gait exercise fatigue and improve the efficiency of the gait training.

In addition, even in the unexpected situations such as when the patient's posture collapses due to insufficient reverse load caused by operator error, the change in reverse load may be detected, or the entry into the restricted area may be detected to stop the additional malfunctions, thereby allowing the trainee to actively learn the natural gait movement in the safe gait training environments.

The term "~ on" used in the above description includes direct contact and indirect contact at a position that is opposite to an upper and lower portion. It is also possible to locate not only the entire top surface or the entire bottom surface but also the partial top surface or the bottom surface, and it is used in the mean that it is opposed in position or contact directly to upper or bottom surface. In addition, terms such as 'top', 'bottom', 'front end', 'rear end', 'upper', 'lower', 'upper end', 'lower end', etc. used in the above description are defined based on the drawings for convenience. , the shape and location of each component are not limited by this term.

Although preferred embodiments of the present invention have been described with reference to a number of illustrative embodiments thereof, the embodiments of the present invention are not limited to the foregoing embodiments, and thus, it should be understood that numerous other modifications and embodiments may be devised by those skilled in the art that will fall within the spirit and scope of the principles of this invention. Hence, the real protective scope of the present invention shall be determined by the technical scope of the accompanying claims.

## Claims

1. A reverse load device comprising:
a rope connected to a subject;
a traction unit configured to pull the rope so as to provide a reverse load to the subject; and
a reverse load weight detection unit configured to measure a reverse load weight provided to the subject.

2. The reverse load device of claim 1, wherein the reverse load weight detection unit is disposed above the subject, and
the reverse load weight detection unit comprises:
a sensing pulley that is in contact with the rope being pulled to support force due to the reverse load;
a force transmission part connected to the sensing pulley to convert a direction of the force so as to transmit the force; and
a load cell configured to measure the force transmitted from the force transmission part.

3. The reverse load device of claim 2, wherein the force transmission part comprises:
a force transmission shaft having one end, on which the sensing pulley is provided, and the other end, on which a pressing part configured to press a force measuring part of the load cell is provided; and
a support part configured to support the force transmission shaft so as to rotate around a rotation shaft provided between the one end and the other end of the force transmission shaft.

4. The reverse load device of claim 3, wherein the pressing part of the force transmission shaft is provided below the force measuring part of the load cell.

5. The reverse load device of claim 3, wherein the rotation shaft is provided at a central portion between the one end and the other end of the force transmission shaft.

6. The reverse load device of claim 1, further comprising a movable pulley and a fixed pulley, which are provided between the reverse load weight detection unit and the traction unit, and around which the rope is partially wound.

7. The reverse load device of claim 6, further comprising a dynamic reverse load compensation unit configured to compensate for the reverse load that varies depending on displacement of the subject,
wherein the dynamic reverse load compensation unit comprises:
a movable member moving in conjunction with the movement of the movable pulley;
a fixed member provided to be fixed between the movable member and the movable pulley; and
a compressive elastic member interposed between the movable member and the fixed member.

8. The reverse load device of claim 7, wherein the dynamic reverse load compensation unit comprises:
a wire connected to and interlocked with the movable pulley and the movable member; and
a dynamic compensation unit configured to apply frictional force to the wire.

9. The reverse load device of claim 6, wherein the traction unit comprises:
a motor part configured to provide rotational force; and
a drum part that rotates by the rotational force to wind the rope around an outer circumferential surface thereof,
wherein the reverse load device further comprises a winding pulley provided between the fixed pulley and the traction unit to determine a position of the outer circumferential surface on which the rope is wound while performing rotational sliding movement along a winding shaft provided in parallel to the outer circumferential surface.

10. The reverse load device of claim 9, further comprising a stopper configured to determine a rotational sliding range of the winding pulley.

11. The reverse load device of claim 10, wherein a maximum fleet angle that is determined by a relative position of the stopper with respect to the fixed pulley is 4° or less.

12. The reverse load device of claim 9, further comprising a horizontal position detection unit provided on at least one of both ends of the winding shaft to detect a relative position of the winding pulley.

13. The reverse load device of claim 1, further comprising a vertical position detection unit configured to measure a relative height of the subject.

14. The reverse load device of claim 1, further comprising a control unit configured to control the traction unit according to the reverse load weight measured by the reverse load weight detection unit.

15. A gait training system comprising:
the reverse load device of any one of claims 1 to 14, which is connected to a trainee performing gait exercise to reduce a load of the trainee;
a joint motion robot worn on a lower limb of the trainee; and
a joint motion robot support unit configured to support the joint motion robot.

16. The gait training system of claim 15, wherein the joint motion robot support unit comprises a robot height-adjusting module comprising:
a shaft member extending in a vertical direction;
a movable member that moves linearly along the shaft member;
a connection block which is provided on the movable member and to which the joint motion robot is connected; and
a height-adjusting elastic member provided between the movable member and the connection block.

17. The gait training system of claim 16, wherein the robot height-adjusting module further comprises a worm gear part configured to transmit rotational force to the shaft member so that the shaft member rotates,
wherein the movable member into which the shaft member is inserted and screw-connected moves linearly in a vertical direction by the rotating shaft member, and
the movable member is self-locked by the worm gear part.

18. The gait training system of claim 15, further comprising a display unit configured to display gait exercise information comprising a reverse load weight measured by the reverse load weight detection unit.

19. The gait training system of claim 15, further comprising a robot reverse load unit,
wherein the robot reverse load unit comprises:
a traction wire connected to the joint motion robot; and
an elastic unit connected to the traction wire and configured to maintain constant tension.
